# EUROPEAN PATENT SPECIFICATION

(11) **EP 2 573 412 B1**
(45) Date of publication and mention of the grant of the patent: **01.03.2017**
(21) Application number: 11783626.2
(22) Date of filing: 19.05.2011
(51) Int. Cl.: F16C 33/64, B60B 35/14, B60B 35/18, F16C 19/18, F16C 33/58

(54) **VEHICLE WHEEL BEARING DEVICE**
LAGERVORRICHTUNG FÜR FAHRZEUGRÄDER
DISPOSITIF DE ROULEMENT DE ROUES DE VÉHICULE

(30) Priority: 20.05.2010 JP 2010115965
(43) Date of publication of application: 27.03.2013
(73) Proprietor: NTN Corporation, Osaka-shi, Osaka 550-0003 (JP)
(72) Inventor: KOMORI, Kazuo, Iwata-shi Shizuoka 438-8510 (JP)
(74) Representative: Cohausz & Florack
(86) International application number: PCT/JP2011/061557
(87) International publication number: WO 2011/145692

(56) References cited:
- EP-A1- 1 947 355
- JP-A- 2004 052 784
- JP-A- 2007 085 555
- JP-A- 2007 292 198
- JP-A- 2008 256 071
- JP-A- 2009 162 335

## Description

### Technical Field

The present invention relates to a wheel bearing apparatus for rotatably supporting a wheel of a vehicle such as an automobile, and more particularly to a wheel bearing apparatus which can prevent the shoulder overriding of the contact ellipse of ball, and generation of edge load, and thus to improve the noise level and life of the wheel bearing.

### Background Art

As a wheel bearing apparatus for supporting a wheel of a vehicle, which rotatably supports a wheel hub for mounting a wheel via a rolling bearing, there are those for a driving wheel and a driven wheel. For structural reasons, the inner ring rotation type is used for a driving wheel and both the inner ring rotation type and the outer ring rotation type are used for a driven wheel. Double row angular contact ball bearings having low rotational torque characteristics are popularly adopted in the wheel bearing apparatus from the point of view of having a desirable bearing rigidity and exhibiting high durability against misalignment and of improving fuel consumption. In the double row angular contact ball bearing, a plurality of balls are interposed between a secured ring and a rotational ring and contact them through applying a predetermined contact angle to the balls.

The wheel bearing apparatuses are broadly classified to the first generation type in which a wheel bearing including a double row angular contact ball bearing etc. is fitted between a knuckle forming part of a suspension apparatus and a wheel hub, the second generation type in which a body mounting flange or a wheel mounting flange is directly formed on the outer circumference of an outer member (outer ring), the third generation type in which one inner raceway surface is directly formed on the outer circumference of a wheel hub, and the fourth generation type in which the inner raceway surface is directly formed on the outer circumferences respectively of the wheel hub and the outer joint member of the constant velocity universal joint.

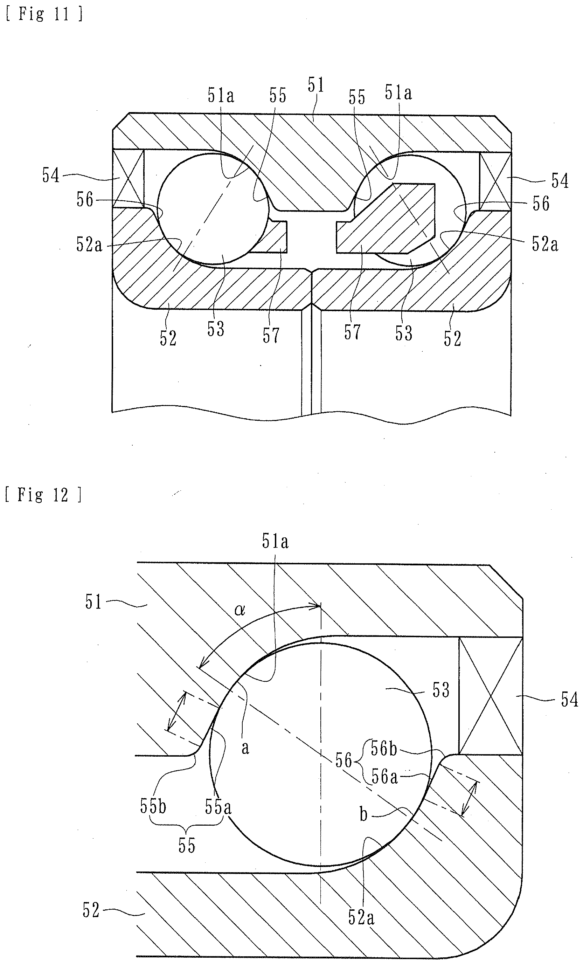

In recent years, there have been strong desires for improvements of "NVH" i.e. "Noise", "Vibration" and "Harshness" to say nothing of improvement of the durability and reduction of manufacturing cost. As shown in Fig. 11, a wheel bearing 50 of the prior art used in the wheel bearing apparatus is formed by a double row angular contact ball bearing including an outer member 51 formed on its inner circumference with a double row outer raceway surface 51a having a circular arc cross-section, a pair of inner rings 52, 52 each being formed on its outer circumference with an inner raceway surface 52a having a circular arc cross-section opposing to the double row outer raceway surface 51a, double row ball 53 contained between the outer and inner raceway surfaces via a cage 57, and the bearing portion of each row having a contact angle α. A seal 54 is mounted in annular openings formed between the outer member 51 and the inner ring 52 to prevent leakage of lubricating grease sealed within the bearing and entering of rain water or dust into the bearing from outside.

As shown in Fig. 12, in higher shoulder edges 55, 56 in cross-sections of the outer and inner raceway surfaces 51a, 52a, there are formed with auxiliary raceway surfaces 55a, 56a smoothly continuous respectively to curves "a", "b" of circular arc cross-section. Each of the auxiliary raceway surfaces 55a, 56a has a cross-section formed by a curve or straight line having a curvature smaller than that of the curves "a", "b". Furthermore, chamfered portions 55b, 56b each having a circular arc cross-section are continuous to the auxiliary raceway surfaces 55a, 56a.

In such a wheel bearing apparatus, since there are formed with the auxiliary raceway surfaces 55a, 56a when a large amount load is loaded on the bearing and then the contact angle α increases, the contact ellipse of ball 53 would be "pushed out" from each raceway surfaces 51a, 52a to the auxiliary raceway surfaces 55a, 56a. However, since the auxiliary raceway surfaces 55a, 56a are smoothly continuous to the curves "a", "b" forming the cross-section of the raceway surfaces 51a, 52a and have straight cross-sections, generation of the edge load (excessive stress) will be prevented although the contact ellipse would be pushed out to the auxiliary raceway surfaces 55a, 56a.

In addition, since each of the auxiliary raceway surfaces 55a, 56a has a straight cross-section, it is possible to set the inclination of the auxiliary raceway surfaces 55a, 56a larger as compared with an inclination formed by extension of the circular arc curves "a", "b" of the raceway surfaces 51a, 52a although the inner diameter of the outer member 51 is set to be small or the outer diameter of the inner ring 52 is set to be large. Accordingly, a condition in which the auxiliary raceway surfaces 55a, 56a have to be ground using a side surface of a grinding wheel can be avoided, and thus the time for grinding can be reduced.

In addition, since the raceway surfaces 51a, 52a have respectively the chamfered surfaces 55b, 56b of circular arc cross-section continuous to edges of the auxiliary raceway surfaces 55a, 56a, the edge load of the contact ellipse can be further reduced (see e.g. Patent Document 1).

### Documents of Prior Art Document

### Patent Document

Patent Document 1: Japanese Laid-open Patent Publication No. 2007-85555.

### Summary of Invention

### Technical Problem

In the wheel bearing apparatus of this kind, the contact ellipse of the ball 53 would override the shoulder portion of the raceway surface if an excessive load is input to the wheel bearing from a wheel and indentations generated on the shoulder would cause abnormal noise when a vehicle climbs a curb. For solving the problem of indentations caused in the shoulder of raceway surface, it is necessary to increase the shoulder height of the raceway surface. However, an increase in the shoulder height causes problems of increase in the weight of wheel bearing and of reduction of its workability and finally of increase of manufacturing cost. On the other hand, sufficient sealability will not be assured due to causing reduction of the cross-section height of the seal 54 by an amount of increase of the shoulder height of the inner ring 52 if it would be increased. In the present specification, a term "shoulder overriding" means a phenomenon in which the contact ellipse formed in a contact portion between the ball 53 and the outer raceway surface 51a is pushed out from the corner between the inner diameter of the outer member 51 and the outer raceway surface 51a and generates the edge load when a large moment load is applied to the wheel bearing.

It is, therefore, an object of the present invention to provide a wheel bearing apparatus which can prevent generation of edge load of the contact ellipse of the ball and improve the noise level and life of the wheel bearing. Solution to Problem

For achieving the object of the present invention, there is provided according to the present invention of claim 1, a wheel bearing apparatus including: an outer member integrally formed on its inner circumference with double row outer raceway surfaces each having a circular arc; an inner member including on its outer circumference with double row inner raceway surfaces each having a circular arc adapted to be arranged oppositely to the double row outer raceway surfaces; and a double row of ball rows rollably contained between both raceway surfaces via cages, wherein a corner of a shoulder portion of the outer member is configured of a first relief surface which is formed of a straight line that is a tangent line of the outer raceway surfaces and a chamfered portion which is round in a circular arc having a predetermined radius of curvature and a length in the radial direction of the first relief surface is set to be greater than or equal to 0.2 mm; wherein a second relief surface, which extends in a straight line shape with a predetermined inclined angle further from the first relief surface, and wherein the first relief surface and the second relief surface are connected with a circular arc surface having a predetermined radius of curvature.

As described above, in the wheel bearing apparatus formed of double row angular contact ball bearing used for the first through the fourth generation structures, the corner of the shoulder portion of the outer member is configured of the relief surface which is formed of the straight line that is the tangent line of the outer raceway surfaces and the chamfered portion which is round in the circular arc having the predetermined radius of curvature and the length in the radial direction of the relief surface is set to be greater than or equal to 0.2 mm, wherein a second relief surface, which extends in a straight line shape with a predetermined inclined angle further from the first relief surface, and wherein the first relief surface and the second relief surface are connected with a circular arc surface having a predetermined radius of curvature. This enables prevention of the shoulder overriding of the contact ellipse of the ball and effectively prevents generation of the edge load. Further, it is possible to improve the noise levels and life of the wheel bearing. Accordingly, the resistance against generation of indentation of the corner increases, and the occurrence of abnormal noise due to the shoulder overriding of the contact ellipse of the ball and the occurrence of the indentation in the shoulder portion may be prevented. Further, this enables suppression of the indentation depth of the corner, prevention of the occurrence of the abnormal sound, due to the shoulder overriding of the contact ellipse of the ball and the occurrence of the indentation in the shoulder portion. Further, this enables to further suppress the indentation depth of the corner and to prevent occurrence of the abnormal sound due to the shoulder overriding of the contact ellipse of the ball and the occurrence of the indentation in the shoulder portion.

It is preferable as defined in claim 2 that the shoulder height with respect to the ball diameter of the double row of the ball rows be set to be a range of 0.35 to 0.50. This enables improvement in the resistance against generation of indentation and reliably prevent the shoulder overriding.

It is preferable as defined in claim 3 that shoulder height of the outer raceway surface in a side, where large moment load is applied, be set larger than the shoulder height of the other outer raceway surface, in the double row outer raceway surfaces. This enables improvement in the resistance against generation of indentation, prevention of the shoulder overriding of the contact ellipse of the ball and prevention of generation of the edge load, even though the large moment load is applied to the ball row. Further, it is possible to improve the noise level and life of the wheel bearing.

It is preferable as defined in claim 4 that a shoulder height Hol of the outer raceway surface of the outer-side in the double row outer raceway surfaces with respect to the ball diameter do of the ball row is set to be in a range of Ho1/do=0.40 to 0.50, and a shoulder height Hi1 of the outer raceway surface of the inner-side with respect to the ball diameter di of the ball row is set to be in a range of Hi1/di=0.35 to 0.45. This enables improvement in the resistance against generation of indentation, prevention of the shoulder overriding of the contact ellipse of the ball compared to the ball row of the inner-side and to prevent generation of the edge load, even though the large moment load is applied to the ball row of the outer-side. Further, it is possible to improve the noise level and life of the wheel bearing.

It is preferable as defined in claim 5 that a pitch circle diameter of the ball row of the outer-side in the double row of the ball rows be set to be larger than a pitch circle diameter of the ball row of the inner-side, and the number of balls of the ball row of the outer-side is set to be greater than the number of balls of the inner-side. This enables a further increase in the basic load rating of the ball row of the outer-side than that of the ball row of the inner-side, improvement in the resistance against generation of indentation, prevention of the shoulder overriding of the contact ellipse of the ball and prevention of the generation of the edge load, even though the large moment load is applied to the ball row of the outer-side. Further, it is possible to improve the noise level and life of the wheel bearing.

It is preferable as defined in claim 6 that the inclined angle of the second relief surface with respect to the relief surface is set to be lower than or equal to 10°. This enables suppression of the indentation depth of the corner.

It is preferable as defined in claim 7 that a surface roughness of the circular arc surface is restricted to lower than or equal to 3.2 Ra. This enables suppression of the occurrence of scratching on the ball, even though the ball contacts the corner when assembling and prevention of the occurrence of the abnormal sound due to scratching on the ball.

It is preferable as defined in claim 8 that a surface roughness of the second relief surface is restricted to lower than or equal to 3.2 Ra. This enables suppression of the occurrence of scratching on the ball, even though the ball contacts the corner when assembling and prevention of the occurrence of the abnormal sound due to scratching on the ball.

### Advantageous Effects of Invention

The wheel bearing apparatus of the present invention including: an outer member integrally formed on its inner circumference with double row outer raceway surfaces each having a circular arc; an inner member including on its outer circumference with double row inner raceway surfaces each having a circular arc adapted to be arranged oppositely to the double row outer raceway surfaces; and a double row of the ball rows rollably contained between both raceway surfaces via cages, wherein a corner of a shoulder portion of the outer member is configured of a relief surface which is formed of a straight line that is a tangent line of the outer raceway surfaces and a chamfered portion which is round in a circular arc having a predetermined radius of curvature; the corner is formed simultaneously by a formed grinding wheel forming the double row outer raceway surfaces and is formed smoothly continuous from each of outer raceway surfaces; and a length in the radial direction of the relief surface is set to be greater than or equal to 0.2 mm. This enables prevention of the shoulder overriding of the contact ellipse of the ball and effectively prevents generation of the edge load. Further, it is possible to improve the noise level and life of the wheel bearing. Accordingly, the resistance against generation of indentation of the corner increases, and the occurrence of abnormal noise due to the shoulder overriding of the contact ellipse of the ball and the occurrence of the indentation in the shoulder portion may prevented.

### Brief Description of Drawings

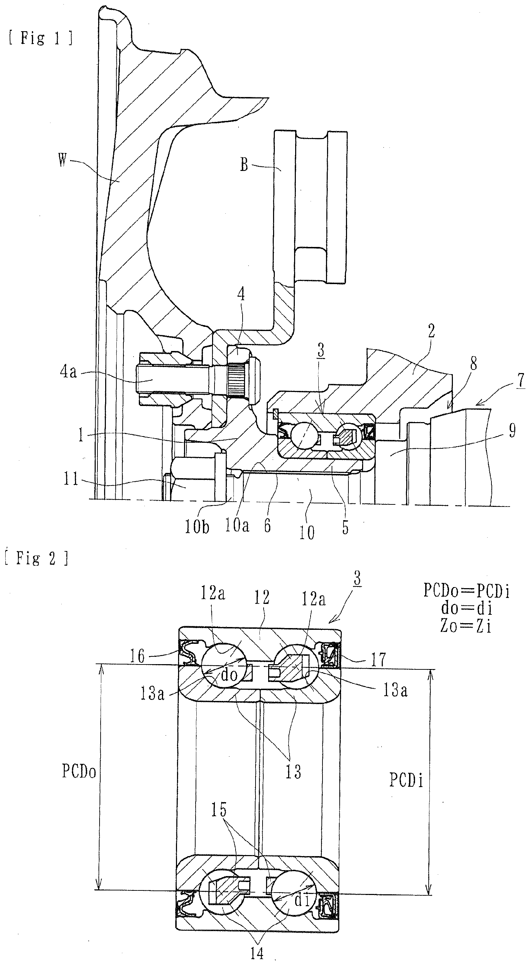

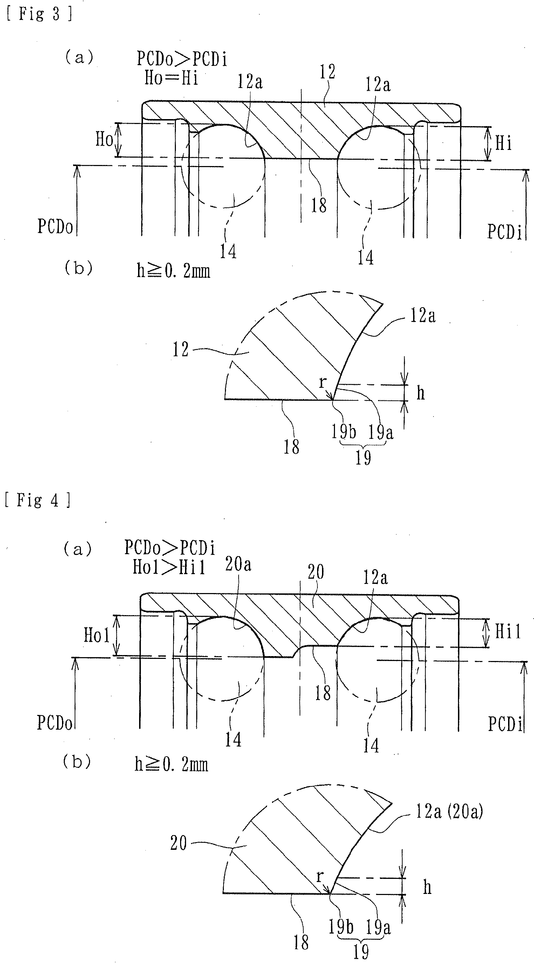

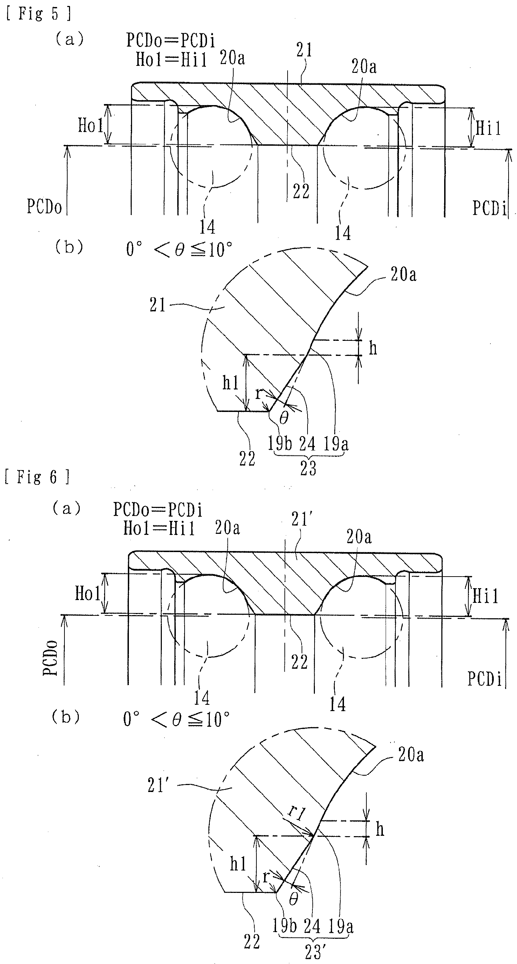

Fig. 1 is a longitudinal sectional view showing a wheel bearing apparatus of related art Fig. 2 is a longitudinal sectional view showing the wheel bearing of Fig. 1. Fig. 3(a) is a longitudinal sectional view showing an outer member of Fig. 2, Fig. 3(b) is an enlarged view showing a main portion of Fig. 3(a). Fig. 4(a) is a
   longitudinal sectional view showing a modification example of the outer member of Fig. 2 and Fig. 4(b) is an enlarged view showing a main portion of Fig. 4(a). Fig. 5(a) is a longitudinal sectional view showing another modification example of the outer member of Fig. 2 and Fig. 5(b) is an enlarged view showing a main portion of Fig. 5(a). Fig. 6(a) is a longitudinal sectional view of a first embodiment of the present invention and Fig. 6(b) is an enlarged view showing a main portion of Fig. 6(a).
Fig. 7(a) is a longitudinal sectional view showing another modification example of the outer member of Fig. 2 and
Fig. 7(b) is an enlarged view showing a main portion of Fig. 7(a).
Fig. 8(a) is a longitudinal sectional view showing another modification example of the outer member of Fig. 2 and
Fig. 8(b) is an enlarged view showing a main portion of Fig. 8(a).
Fig. 9(a) is a longitudinal sectional view showing another modification example of the outer member of Fig. 2 and
Fig. 9(b) is an enlarged view showing a main portion of Fig. 9(a).
Fig. 10(a) is a longitudinal sectional view of a second embodiment of the present invention showing a modification example of the outer member and Fig. 10(b)
   is an enlarged view showing a main portion of Fig. 10(a).
Fig. 11 is a longitudinal sectional view showing a wheel bearing of the cited document of related art.
Fig. 12 is an enlarged view showing a main portion of Fig. 11.

### Description of Embodiments

A wheel bearing apparatus includes: an outer member integrally formed on its inner circumference with double row outer raceway surfaces each having a circular arc; a pair of inner rings including on its outer circumference with inner raceway surfaces each having a circular arc adapted to be arranged oppositely to the double row outer raceway surfaces; and double row of the ball rows rollably contained between both raceway surfaces via cages, wherein the shoulder height of the outer member with respect to the ball diameter of the double row of the ball rows is set to be in a range of 0.35 to 0.50, and a corner of a shoulder portion is configured of a relief surface which is a straight line that is a tangent line of the outer raceway surfaces and a chamfered portion which is round in a circular arc having a predetermined radius of curvature; the corner is formed simultaneously by a formed grinding wheel forming the double row outer raceway surfaces and is formed smoothly continuous from each of outer raceway surfaces; and a length in the radial direction of the relief surface is set to be greater than or equal to 0.2 mm.

### Embodiments

Embodiments of the present invention will be hereinafter described with reference to the drawings.

Fig. 1 is a longitudinal sectional view showing an embodiment of a wheel bearing apparatus being the basis of the present invention, Fig. 2 is a longitudinal sectional view showing
the wheel bearing of Fig. 1, Fig. 3(a) is a longitudinal sectional view showing an outer member of Fig. 2, Fig. 3(b) is an enlarged view showing a main portion of Fig. 3(a), Fig. 4(a) is a longitudinal sectional view showing a modification example of the outer member of Fig. 2, Fig. 4(b) is an enlarged view showing a main portion of Fig. 4(a), Figs. 5(a) to 10(a) are longitudinal sectional views showing other modification examples of the outer member of Fig. 2, and Figs. 5(b) to 10(b) are enlarged views showing main portions of Figs. 5(a) to 10(a). In addition, in the description below, an outer side of the wheel bearing apparatus when it is mounted on a vehicle is referred to as "outer-side" (the left side in Fig. 1), and the center thereof is referred to as "inner-side" (the right side in Fig. 1).

The illustrated wheel bearing apparatus is a so-called first generation type used for driving wheel and is mainly configured of a wheel hub 1 and a wheel bearing 3 which is press fitted in the wheel hub 1 and rotatably supports the wheel hub 1 with respect to a knuckle 2. The wheel hub 1 has a wheel mounting flange 4 for mounting a wheel W at its outer-side end and, on its outer circumference, a cylindrical portion 5 extending from the wheel mounting flange 4 in the axial direction. In the wheel mounting flange 4, hub bolts 4a fastening the wheel W and a brake rotor B are implanted in equidistance in the circumferential direction. In addition, serrations (or a spline) 6 for transmitting the torque are formed in the inner circumference of the wheel hub 1 and the wheel bearing 3 is press fitted in the outer circumference surface of the cylindrical portion 5.

The wheel hub 1 is made of medium/high carbon steel including carbon of 0.40 to 0.80 % by weight such as S53C and hardened with high frequency induction hardening so that a region from an inner-side base of the wheel mounting flange 4 to the cylindrical portion 5 has surface hardness of a range of 50 to 64 HRC. Accordingly, this makes it possible to apply a sufficient mechanical strength against a rotary bending load applied to the wheel mounting flange 4 and to improve the anti-fretting property of the cylindrical portion 5 that is a fitting portion of the wheel bearing 3, and to improve the durability of the wheel hub 1.

The wheel bearing 3 is fixed in a state where the wheel bearing 3 is clamped by a shoulder portion 9 of an outer joint member 8 configuring a constant velocity universal joint 7 and the wheel hub 1. A stem portion 10 extending from the shoulder portion 9 is integrally formed in the outer joint member 8 in the axial direction. The outer circumference of the stem portion 10 has serrations (or a spline) 10a engaging the serrations 6 of the wheel hub 1 and a male thread 10b. Thus, the torque from an engine is transmitted to the wheel hub 1 via a drive shaft (not shown), the constant velocity universal joint 7 and the serrations 10a of the stem portion 10. Further, a fixing nut 11 is fastened to the male thread 10b of the stem portion 10 in a predetermined fastening torque and then a desired bearing preload is provided to the wheel bearing 3.

As shown in enlarged view of Fig. 2, the wheel bearing 3 includes an outer member (an outer ring) 12, a pair of inner rings 13, 13 which are inserted into the outer member 12, double row balls 14, 14 contained between the outer member 12 and the inner rings 13, and configures a back surface combination-type double row angular contact ball bearing which is set in a state where end surfaces in the front side of the pair of inner rings 13, 13 are abutted.

The outer member 12 is made of high carbon-chromium bearing steel such as SUJ2 and double row outer raceway surfaces 12a, 12a are integrally formed in the inner circumference thereof. The inner ring 13 is made of the high carbon-chromium bearing steel such as SUJ2 and the inner raceway surfaces 13a are formed to face the double row outer raceway surfaces 12a, 12a in the outer circumference thereof. Thus, the double row balls 14, 14 made of the high carbon-chromium bearing steel such as SUJ2 are received between the raceway surfaces 12a, 13a respectively, and are rollably held by cages 15, 15. In addition, seals 16, 17 are provided on the end portions of the wheel bearings 3 and then leakage of lubrication grease enclosed in the bearing, and invading of rain water, dust or the like from outside into the bearing are prevented.

In the embodiment, a pitch circle diameter PCDo of the outer-side ball 14 row and a pitch circle diameter PCDi of the inner-side ball 14 row are set to be the same diameter (PCDo=PCDi), a ball diameter do of the outer-side ball 14 row and a ball diameter di of the inner-side ball 14 row are set to be the same diameter (do=di) and the number of balls Zo of the outer-side ball 14 row and the number of balls Zi of the inner-side ball 14 row are set to be the same (Zo=Zi).

Here, as shown in Fig. 3(a), heights Ho, Hi of the shoulders of the double row outer raceway surfaces 12a, 12a of the outer member 12 are set to be the same. In addition, the heights Ho, Hi of the shoulders with respect to the ball diameters do, di of the ball 14 row are set to be in a range of Ho/do=Hi/di=0.35 to 0.50. Thus, as shown in Fig. 3(b), a corner 19 of the shoulder portion 18 is configured of a relief surface 19a and a chamfered portion 19b. The relief surface 19a is formed in the straight line which is a tangent line of the outer raceway surface 12a having a circular arc in cross-section, and the chamfered portion 19b is round in a circular arc having a radius of curvature r of R 0.15 to 2.0. Thus, the corner 19 is formed simultaneously by a formed grinding wheel forming the double row outer raceway surfaces 12a, 12a, and is formed smoothly continuous from each of the outer raceway surfaces 12a, 12a. For example, "relief surface" can be obtained by measuring the cross-section shape and calculating a turning point of R and non-R. Here, a region of non-R from a turning point referred to as "the relief surface". Thus, a length in the radial direction of "the relief surface" is h.

Usually, the grinding process of the double row outer raceway surfaces 12a, 12a is configured such that a grinding wheel is arranged in the inner diameter side of the double row outer raceway surfaces 12a, 12a and the process is performed while transporting the grinding wheel to the outside in the radial direction. When the shoulder height of the outer member 12 is high, the corner 19 of the shoulder portion 18 is processed with the side surface of the grinding wheel and since a pressing force in the cutting direction is not enough, the process time is long. However, in the embodiment, since the corner 19 of the shoulder portion 18 is configured of the relief surface 19a and the chamfered portion 19b, enough pressing force is obtained, the process time becomes short and then a preferred process efficiency can be maintained even though the shoulder height is set to be high. The applicant of the present invention produced samples specified in Table 1 below and an indentation resistance test of the corner of the shoulder portion is carried out.

**[Table 1]**

| 1.4 G equivalent moment load | | | |
|---|---|---|---|
| Specification | Length of radius of relief surface (height in radial direction) | Height of groove (H/D) | Depth of indentation of shoulder portion |
| Related art (R=0.5) | aiming 0.2 mm | 0.38 | 0.8 to 1.8 µm |
| Relief surface of grinding | aiming 0.2 mm | 0.38 | 1.0 to 1.6 µm |
| | aiming 0.7 mm | 0.42 | 0 |

As is clear from the result of the indentation resistance test, when the relief surface 19a is formed of the straight line which is the tangent line of the outer raceway surface 12a having the circular arc in cross-section and the length h in its radial direction is greater than or equal to 0.2 mm, the resistance against generation of indentation (difficulty of occurrence of the indentation) of the corner increases. Thus, riding of a contact ellipse of the ball 14 over the shoulder portion and occurrence of abnormal noise due to the indentation in the shoulder portion 18 can be prevented and then the process efficiency can also be maintained.

A modification example of the outer member is shown in Fig. 4. As shown in Fig. 4(a), in the outer member 20, the pitch circle diameter PCDo of the outer-side ball 14 row and the pitch circle diameter PCDi of the inner-side ball 14 row are set to be the same diameter (PCDo=PCDi), the ball diameter do of the outer-side ball 14 row and the ball diameter di of the inner-side ball 14 row are set to be the same diameter (do=di) and the number of balls Zo of the outer-side ball 14 row and the number of balls Zi of the inner-side ball 14 row are set to be the same (Zo=Zi).

In addition, the heights Ho1, Hi1 of the shoulders the double row outer raceway surfaces 20a, 12a are set to be different to each other. In other words, the shoulder height Ho1 of the outer raceway surface 20a of the outer-side with respect to the ball diameter do of the ball 14 row is set to be in a range of Ho1/do=0.40 to 0.50 and the shoulder height Hi1 of the outer raceway surface 12a of the inner-side with respect to the ball diameter di of the ball 14 row is set to be in a range of Hi1/di=0.35 to 0.45 (Ho1≥Hi1).

Thus, as shown in Fig. 4(b), the corner 19 of both shoulder portions 18 is configured of the relief surface 19a and the chamfered portion 19b. The relief surface 19a is formed of the straight line which is the tangent line of the outer raceway surfaces 20a, 12a having a circular arc in cross-section, and the chamfered portion 19b is rounded into a curve having a radius of curvature r of R 0.15 to 2.0. Thus, the corner 19 is formed simultaneously by a formed grinding wheel forming the double row outer raceway surfaces 20a, 12a, and is formed smoothly continuous from each of the outer raceway surfaces 20a, 12a.

Accordingly, basic loads rating of the outer-side ball 14 row and the inner-side ball 14 row are the same as each other. The resistance against generation of indentation is improved and the shoulder riding of the contact ellipse of the ball 14 is prevented and then occurrence of the edge load is prevented compared to the inner side ball 14 row, and the noise level and the life are improved even though a large moment load is applied to the outer-side ball 14 row.

Another modification example of the outer member is shown in Fig. 5. As shown in Fig. 5(a), in the outer member 21, the pitch circle diameter PCDo of the outer-side ball 14 row and the pitch circle diameter PCDi of the inner-side ball 14 row are set to be the same diameter (PCDo=PCDi), the ball diameter do of the outer-side ball 14 row and the ball diameter di of the inner-side ball 14 row are set to be the same diameter (do=di) and the number of balls Zo of the outer-side ball 14 row and the number of balls Zi of the inner-side ball 14 row are set to be the same (Zo=Zi).

In addition, the heights Ho1, Hi1 of the shoulders of the double row outer raceway surfaces 20a, 20a are set to be the same as each other. Thus, the heights Ho1, Hi1 of the shoulders with respect to the ball diameter do of the ball 14 row are set to be in a range of Ho1/do=Hi1/di=0.40 to 0.50.

Thus, as shown in Fig. 5(b), the corner 23 of both shoulder portions 22 is configured of the relief surface 19a, a second relief surface 24 and the chamfered portion 19b. The relief surface 19a is formed of the straight line which is the tangent line of the outer raceway surfaces 20a, 20a having the circular arc in cross-section, the second relief surface 24 is a straight line shape extending with an inclined angle θ further from the relief surface 19a and is formed with a turning surface. The relief surface 19a is formed simultaneously by the formed grinding wheel forming the double row outer raceway surfaces 20a, 20a, and is formed smoothly continuous from each of the outer raceway surfaces 20a, 20a. Here, it is desirable that the surface roughness of the second relief surface 24 be restricted lower than or equal to 3.2 Ra. Ra is one of parameters of roughness shape in JIS (JIS B0601-1994) and is an average value of an absolute value deviation from an average line as an arithmetic average roughness. Accordingly, even though the ball 14 contacts the corner 23 during assembly, occurrence of scratching on the ball 14 can be suppressed and occurrence of the abnormal sound due to scratching on the ball can be prevented.

In addition, the inclined angle θ of the second relief surface 24 with respect to the relief surface 19a is set to be lower than or equal to 10°. Further, the length h in the radial direction of the relief surface 19a is set to be greater than or equal to 0.2 mm and the length h1 in the radial direction of the second relief surface 24 is set to be in a range of 0.2 to 0.7 mm. Accordingly, the depth of the indentation of the corner 23 can be suppressed. The occurrence of the abnormal sound, because the contact ellipse of the ball 14 rides the shoulder and the indentation occurs in the shoulder portion 22, can be prevented and the resistance against generation of indentation and the balance of the weight can be preferably set.

A first embodiment of the present invention is shown in terms of another modification example of the outer member in Fig. 6. An outer member 21' is different a portion of the configuration from the outer member 21 and the corner of the shoulder of Fig. 4. In other words, the heights Ho1, Hi1 of shoulders of the double row outer raceway surfaces 20a, 20a are set to be the same as each other. Thus, the heights Ho1, Hi1 of the shoulders with respect to the ball diameter do of the ball 14 row are set to be in a range of Ho1/do=Hi1/di=0.40 to 0.50.

As shown in Fig. 6(b), a corner 23' of both shoulder portions 22 is configured of the relief surface 19a, the second relief surface 24 and the chamfered portion 19b. The relief surface 19a and the second relief surface 24 can be connected with a circular arc surface having a predetermined radius of curvature r1. Accordingly, the depth of the indentation of the corner 23' can be suppressed and occurrence of the abnormal sound, because the contact ellipse of the ball 14 rides the shoulder portion and the indentation occurs in the shoulder portion 22, can be prevented.

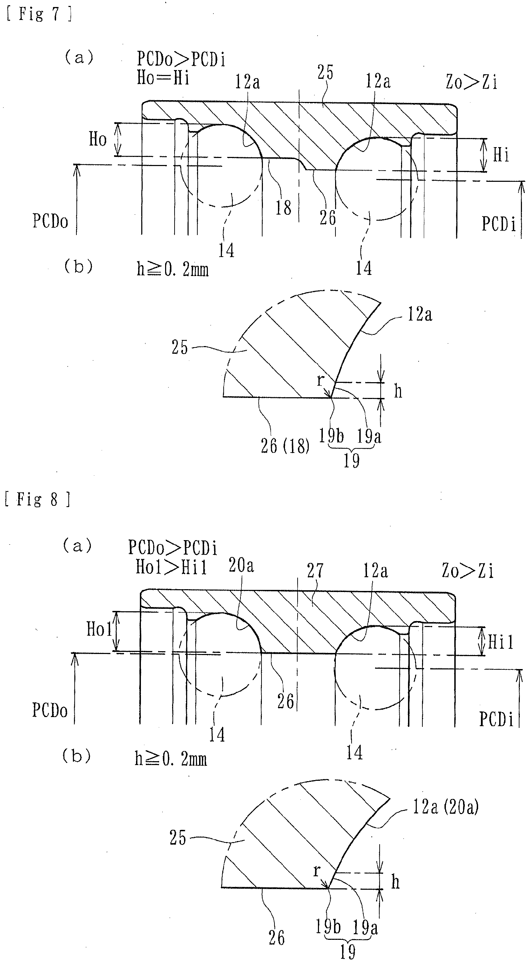

Another modification example of the outer member is shown in Fig. 7. As shown in Fig. 7(a), in an outer member 25, the pitch circle diameter PCDo of the outer-side ball 14 row is set to be larger than the pitch circle diameter PCDi of the inner-side ball 14 row (PCDo>PCDi) and the ball diameter do of the outer-side ball 14 row and the ball diameter di of the inner-side ball 14 row are set to be the same as each other (do=di), and the number of balls Zo of the outer-side ball 14 row is set to be greater than the number of balls Zi of the inner-side ball 14 row (Zo>Zi).

In addition, the heights Ho, Hi of the shoulders of the double row outer raceway surfaces 12a, 12a are set to be the same as each other. In other words, the shoulder height Ho1 of the outer raceway surface 20a of the outer-side with respect to the ball diameter do of the ball 14 row is set to be in a range of Ho/do=Hi/di=0.35 to 0.50.

As shown in Fig. 7(b), the corner 19 of the shoulder portions 18, 26 is configured of the relief surface 19a and the chamfered portion 19b. The relief surface 19a is formed in the straight line which is the tangent line of the outer raceway surfaces 12a, 12a having the circular arc in cross-section and the chamfered portion 19b is round in the circular arc having a radius of curvature r of R0.15 to 2.0. Thus, the corner 19 is formed simultaneously by the formed grinding wheel forming the double row outer raceway surfaces 12a, 12a, and is formed smoothly continuous from each of the outer raceway surfaces 12a, 12a.

Accordingly, the basic loads rating of the outer-side ball 14 row and the inner-side ball 14 row increase. The resistance against generation of indentation is improved and the shoulder riding of the contact ellipse of the ball 14 is prevented and then occurrence of the edge load is prevented, and the noise level and the life are improved even though the large moment load is applied to the outer-side ball 14 row.

Another modification example of the outer member is shown in Fig. 8. As shown in Fig. 8(a), in an outer member 27, the pitch circle diameter PCDo of the outer-side ball 14 row is set to be larger than the pitch circle diameter PCDi of the inner-side ball 14 row (PCDo>PCDi) and the ball diameter do of the outer-side ball 14 row and the ball diameter di of the inner-side ball 14 row are set to be the same as each other (do=di), and the number of balls Zo of the outer-side ball 14 row is set to be greater than the number of balls Zi of the inner-side ball 14 row (Zo>Zi).

In addition, the heights Ho1, Hi1 of the shoulders of the double row outer raceway surfaces 20a, 12a are set to be different from each other. In other words, the shoulder height Ho1 of the outer raceway surface 20a of the outer-side with respect to the ball diameter do of the ball 14 row is set to be in a range of Ho1/do=0.40 to 0.50. The shoulder height Hi1 of the outer raceway surface 12a of the inner-side with respect to the ball diameter di of the ball 4 row is set to be in a range of Hi1/di=0.35 to 0.45 (Ho1≥Hi1).

As shown in Fig. 8(b), the corner 19 of the shoulder portion 26 is configured of the relief surface 19a, a second chamfered portion 24 and the chamfered portion 19b. The relief surface 19a is formed of the straight line which is the tangent line of the outer raceway surfaces 12a, 12a having the circular arc in cross-section and the chamfered portion 19b is rounded into the circular arc having the radius of curvature r of R0.15 to 2.0. Thus, the corner 19 is formed simultaneously by the formed grinding wheel forming the double row outer raceway surfaces 20a, 12a, and is formed smoothly continuous from each of the outer raceway surfaces 20a, 12a.

Accordingly, the basic loads rating of the outer-side ball 14 row and the inner-side ball 14 row increase. The resistance against generation of indentation is improved and the shoulder riding of the contact ellipse of the ball 14 is prevented compared to the inner-side ball 14 row and then occurrence of the edge load is prevented, and the noise level and the life are improved even though the large moment load is applied to the outer-side ball 14 row.

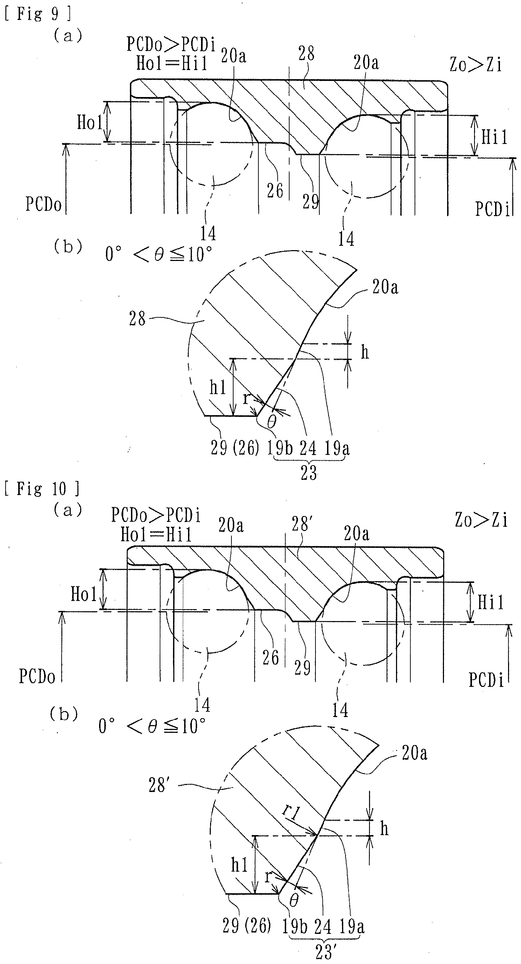

Another modification example of the outer member is shown in Fig. 9. As shown in Fig. 9(a), in an outer member 28, the pitch circle diameter PCDo of the outer-side ball 14 row is set to be larger than the pitch circle diameter PCDi of the inner-side ball 14 row (PCDo>PCDi) and the ball diameter do of the outer-side ball 14 row and the ball diameter di of the inner-side ball 14 row are set to be the same (do=di) each other, and the number of balls Zo of the outer-side ball 14 row is set to be greater than the number of balls Zi of the inner-side ball 14 row (Zo>Zi).

In addition, the heights Ho, Hi of the shoulders, of the double row outer raceway surfaces 20a, 20a are set to be the same as each other. In other words, the heights Ho1, Hi1 of the shoulders of the double row outer raceway surfaces 20a, 20a of the outside with respect to the ball diameters do, di of the ball 14 row are set to be in a range of Ho1/do=Hi1/di=0.35 to 0.50.

As shown in Fig. 9(b), the corner 23 of the shoulder portions 26, 29 is configured of the relief surface 19a, the second chamfered portion 24 and the chamfered portion 19b. The relief surface 19a is formed of the straight line which is the tangent line of the outer raceway surfaces 20a, 20a having the circular arc in cross-section and the second chamfered portion 24 is formed of the straight line shape extending with the inclined angle θ further from the relief surface 19a and is formed with the turning surface. The relief surface 19a is formed simultaneously by the formed grinding wheel forming the double row outer raceway surfaces 20a, 20a, and is formed smoothly continuous from each of the outer raceway surfaces 20a, 20a.

In addition, the inclined angle θ of the second relief surface 24 with respect to the relief surface 19a is set to be lower than or equal to 10°. Further, the length h in the radial direction of the relief surface 19a is set to be greater than or equal to 0.2 mm and the length h1 in the radial direction of the second relief surface 24 is set to be in a range of 0.2 to 0.7 mm. Accordingly, the depth of the indentation of the corner 23 can be suppressed. Occurrence of the abnormal sound, because the contact ellipse of the ball 14 rides the shoulder and the indentation occurs in the shoulder portions 26, 29, can be prevented, and the resistance against generation of indentation and the balance of the weight can be preferably set.

Accordingly, the basic loads rating of the outer-side ball 14 row and the inner-side ball 14 row increase. The resistance against generation of indentation is improved and the shoulder riding of the contact ellipse of the ball 14 is prevented and then occurrence of the edge load is prevented, and the noise level and the life are improved even though the large moment load is applied to the outer-side ball 14 row.

A second embodiment of the present invention is shown in terms of another modification example of the outer member in Fig. 10. An outer member 28' is different in a portion of the configuration from the outer member 28 and the corner of the shoulder portion of Fig. 9. In other words, the heights Ho1, Hi1 of shoulders of the double row outer raceway surfaces 20a, 20a are set to be the same as each other.
Thus, the heights Ho1, Hi1 of the shoulders with respect to the ball diameter do of the ball 14 row are set to be in a range of Ho1/do=Hi1/di=0.40 to 0.50.

As shown in Fig. 10(b), a corner 23' of both shoulder portions 26, 29 is configured of the relief surface 19a, the second relief surface 24 and the chamfered portion 19b. The relief surface 19a and the second relief surface 24 can be connected with a circular arc surface having a predetermined radius of curvature r1. Accordingly, the depth of the indentation of the corner 23' can be suppressed and occurrence of the abnormal sound, because the contact ellipse of the ball 14 rides the shoulder portion and the indentation occurs in the shoulder portions 26, 29, can be prevented.

The present invention has been described with reference to the preferred embodiments. Obviously, modifications and alterations will occur to those of ordinary skill in the art upon reading and understanding the preceding detailed description. It is intended that the present invention be construed as including all such alternations and modifications insofar as they come within the scope of the appended claims or the equivalents thereof.

### Industrial Applicability

The wheel bearing apparatus of the present invention can be applied to the wheel bearing apparatus of first through fourth generation types irrespective of whether it is used for a driving wheel or a driven wheel.

### Reference Signs List

1 wheel hub
2 knuckle
3 wheel bearing
4 wheel mounting flange
4a hub bolt
5 cylindrical portion
6, 10a serration
7 constant velocity universal joint
8 outer joint member
9 shoulder portion
10 stem portion
10b male thread
11 fixing nut
12, 20, 21, 21', 25, 28, 28' outer member
12a, 20a outer raceway surface
13 inner ring
13a inner raceway surface
13b small end face
14 ball
15 cage
16, 17 seal
18, 22, 26, 29 shoulder portion
19, 23, 23' corner of shoulder portion
19a, 24 relief surface
19b chamfered portion
50 wheel bearing apparatus
51 outer member
51a outer raceway surface
52 inner ring
52a inner raceway surface
53 ball
54 seal
55, 56 edge of shoulder
55a, 56a auxiliary raceway surface
55b, 56b chamfered portion
57 cage
a, b curved surface
di ball diameter of inner-side ball row
do ball diameter of outer-side ball row
Hi, Hi1 shoulder height of inner raceway surface of inner ring
Ho, Ho1 shoulder height of outer raceway surface of outer-side
h, h1 length in radial direction of relief surface
PCDi pitch circle diameter of inner-side ball row
PCDo pitch circle diameter of outer-side ball row
r radius of curvature of chamfered portion of corner
r1 radius of curvature of circular arc surface
Zi number of balls of inner-side ball row
Zo number of balls of outer-side ball row
α contact angle
θ inclined angle of relief surface

## Claims

1. A wheel bearing apparatus (3) comprising:
an outer member (21', 28') integrally formed on its inner circumference with double row outer raceway surfaces (20a) each having a circular arc;
an inner member (13) including on its outer circumference double row inner raceway surfaces (13a) each having a circular arc adapted to be arranged oppositely to the double row outer raceway surfaces (20a); and
a double row of balls (14) rollably contained between both raceway surfaces (13a, 20a) via cages (15),
wherein a corner (23') of a shoulder portion (22; 26, 29) of the outer member (21', 28') is configured as a first relief surface (19a) which is a straight line that is a tangent line of the outer raceway surfaces (20a) and a chamfered portion (19b) which is round in a circular arc having a predetermined radius of curvature (r) and a length in the radial direction of the first relief surface (19a) is set to be greater than or equal to 0.2 mm; wherein a second relief surface (24), which extends in a straight line shape with a predetermined inclined angle θ further from the first relief surface (19a), and wherein the first relief surface (19a) and the second relief surface (24) are connected with a circular arc surface having a predetermined radius of curvature (r1).

2. The wheel bearing apparatus (3) according to claim 1,
wherein a shoulder height (Ho,Hi) of the shoulder portion with respect to the ball diameter of the double row of the ball rows (14) is set to be a range of 0.35 to 0.50.

3. The wheel bearing apparatus (3) according to claim 1 or 2,
wherein the shoulder height (Ho1) of the outer raceway surface (20a) in a side, where large moment load is applied, in the double row outer raceway surfaces (20a) is set to be larger than the shoulder height (Hi1) of the outer raceway surface (20a) of the other side.

4. The wheel bearing apparatus (3) according to claim 3,
wherein a shoulder height (Ho1) of the outer raceway surface (20a) of the outer-side in the double row outer raceway surfaces (20a) with respect to the ball diameter (do) of the ball row (14) is set to be in a range of Ho1 /do=0.40 to 0.50, and a shoulder height (Hi1) of the outer raceway surface (20a) of the inner-side with respect to the ball diameter (di) of the ball row (14) is set to be in a range of Hi1/di=0.35 to 0.45.

5. The wheel bearing apparatus (3) according to claim 1,
wherein a pitch circle diameter (PCDo) of the ball row of the outer-side in the double row of ball (14) is set to be larger than a pitch circle diameter (PCDi) of the ball row (14) of the inner-side, and the number of balls of the ball row (14) of the outer-side is set to be greater than the number of balls of the inner-side.

6. The wheel bearing apparatus (3) according to claim 1,
wherein the inclined angle (Θ) of the second relief surface (24) with respect to the first relief surface (19a) is set to be lower than or equal to 10°.

7. The wheel bearing apparatus (3) according to claim 1,
wherein a surface roughness of the circular arc surface is restricted to lower than or equal to 3.2 Ra.

8. The wheel bearing apparatus (3) according to any one of claims 1 to 7,
wherein a surface roughness of the second relief surface (24) is restricted to lower than or equal to 3.2 Ra.

## Patentansprüche

1. Radlagervorrichtung (3), umfassend:
ein äußeres Element (21', 28'), das einstückig auf seinem inneren Umfang mit doppelreihigen äußeren Laufbahnoberflächen (20a) gebildet ist, die jeweils einen kreisförmigen Bogen aufweisen;
ein inneres Element (13), das auf seinem äußeren Umfang doppelreihige innere Laufbahnoberflächen (13a) aufweist, die jeweils einen kreisförmigen Bogen aufweisen, der geeignet ist, gegenüber den doppelreihigen äußeren Laufbahnoberflächen (20a) angeordnet zu werden; und
eine Doppelreihe von Kugeln (14), die rollbar zwischen beiden Laufbahnoberflächen (13a, 20a) mittels Käfigen (15) aufgenommen sind,
wobei eine Ecke (23') eines Schulterabschnitts (22; 26, 29) des äußeren Elements (21', 28') als eine erste Entlastungsoberfläche (19a) konfiguriert ist, die eine gerade Linie umfasst, die eine Tangentiallinie der äußeren Laufbahnoberflächen (20a) ist, und einen angeschrägten Abschnitt (19b) umfasst, der in einem kreisförmigen Bogen mit einem vorbestimmten Krümmungsradius (r) rund ist, und wobei eine Länge in der radialen Richtung der ersten Entlastungsoberfläche (19a) derart eingestellt ist, dass sie größer als oder gleich 0,2 mm ist;
wobei sich eine zweite Entlastungsoberfläche (24) in einer geraden Linienform mit einem vorbestimmten Neigungswinkel θ weiter von der ersten Entlastungsoberfläche (19a) weg erstreckt und wobei die erste Entlastungsoberfläche (19a) und die zweite Entlastungsoberfläche (24) mit einer kreisförmigen Bogenoberfläche verbunden sind, die einen vorbestimmten Krümmungsradius (r1) aufweist.

2. Radlagervorrichtung (3) nach Anspruch 1,
wobei eine Schulterhöhe (Ho, Hi) des Schulterabschnitts in Bezug auf den Kugeldurchmesser der Doppelreihe der Kugelreihen (14) auf einen Bereich von 0,35 bis 0,50 eingestellt ist.

3. Radlagervorrichtung (3) nach Anspruch 1 oder 2,
wobei die Schulterhöhe (Ho1) der äußeren Laufbahnoberfläche (20a) in einer Seite, an welche eine große Momentbelastung angelegt ist, in den doppelreihigen äußeren Laufbahnoberflächen (20a) derart eingestellt ist, dass sie größer als die Schulterhöhe (Hi1) der äußeren Laufbahnoberfläche (20a) der anderen Seite ist.

4. Radlagervorrichtung (3) nach Anspruch 3,
wobei eine Schulterhöhe (Ho1) der äußeren Laufbahnoberfläche (20a) der Außenseite in den doppelreihigen Laufbahnoberflächen (20a) in Bezug auf den Kugeldurchmesser (do) der Kugelreihe (14) derart eingestellt ist, dass sie in einem Bereich von Ho1/do=0,40 bis 0,50 liegt, und eine Schulterhöhe (Hi1) der äußeren Laufbahnoberfläche (20a) der Innenseite in Bezug auf den Kugeldurchmesser (di) der Kugelreihe (14) derart eingestellt ist, dass sie in einem Bereich von Hi1/di=0,35 bis 0,45 liegt.

5. Radlagervorrichtung (3) nach Anspruch 1,
wobei ein Teilkreisdurchmesser (PCDo) der Kugelreihe der Außenseite in der Doppelreihe der Kugeln (14) derart eingestellt ist, dass er größer als ein Teilkreisdurchmesser (PCDi) der Kugelreihe (14) der Innenseite ist, und die Anzahl von Kugeln der Kugelreihe (14) der Außenseite derart eingestellt ist, dass sie größer als die Anzahl von Kugeln der Innenseite ist.

6. Radlagervorrichtung (3) nach Anspruch 1,
wobei der Neigungswinkel (θ) der zweiten Entlastungsoberfläche (24) in Bezug auf die erste Entlastungsoberfläche (19a) derart eingestellt ist, dass er kleiner als oder gleich 10° ist.

7. Radlagervorrichtung (3) nach Anspruch 1,
wobei eine Oberflächenrauheit der kreisförmigen Bogenoberfläche auf weniger als oder gleich 3,2 Ra beschränkt ist.

8. Radlagervorrichtung (3) nach einem der Ansprüche 1 bis 7,
wobei eine Oberflächenrauheit der zweiten Entlastungsoberfläche (24) auf weniger als oder gleich 3,2 Ra beschränkt ist.

## Revendications

1. Dispositif de palier pour roue (3) comprenant :
un élément extérieur (21', 28') formé de façon solidaire, sur sa circonférence intérieure, avec des surfaces de chemins de roulement extérieurs à double rangée (20a), chaque surface ayant un arc circulaire ;
un élément intérieur (13) comprenant, sur sa circonférence extérieure, des surfaces de chemins de roulement intérieurs à double rangée (13a), chaque surface ayant un arc circulaire adapté pour être agencé de façon opposée aux surfaces des chemins de roulement extérieurs à double rangée (20a) ; et
une double rangée de billes (14) contenues de manière à pouvoir rouler entre les deux surfaces des chemins de roulement (13a, 20a) via des cages (15), dispositif de palier pour roue dans lequel une partie angulaire (23') d'une partie d'épaulement (22 ; 26, 29) de l'élément extérieur (21', 28') est configurée comme une première surface en relief (19a) qui est une ligne droite qui est une ligne tangente des surfaces des chemins de roulement extérieurs (20a) et d'une partie chanfreinée (19b) qui est arrondie dans un arc circulaire ayant un rayon de courbure prédéterminé (r), et une longueur se trouvant dans la direction radiale de la première surface en relief (19a) est réglée pour être supérieure ou égale à 0,2 mm; dispositif de palier pour roue dans lequel une seconde surface en relief (24) s'étend en forme de ligne droite ayant un angle incliné prédéterminé (θ) plus éloigné de la première surface en relief (19a), et dispositif de palier pour roue dans lequel la première surface en relief (19a) et la seconde surface en relief (24) sont reliées par une surface d'arc circulaire ayant un rayon de courbure prédéterminé (r1).

2. Dispositif de palier pour roue (3) selon la revendication 1, dans lequel une hauteur d'épaulement (Ho, Hi) de la partie d'épaulement est réglée pour être dans une plage comprise entre 0,35 et 0,50 par rapport au diamètre de billes de la double rangée des rangées de billes (14).

3. Dispositif de palier pour roue (3) selon la revendication 1 ou 2, dans lequel la hauteur d'épaulement (Ho1) de la surface du chemin de roulement extérieur (20a), sur un côté où une charge instantanée importante est appliquée, dans les surfaces des chemins de roulement extérieurs à double rangée (20a), est réglée pour être supérieure à la hauteur d'épaulement (Hi1) de la surface du chemin de roulement extérieur (20a) de l'autre côté.

4. Dispositif de palier pour roue (3) selon la revendication 3, dans lequel une hauteur d'épaulement (Ho1) de la surface du chemin de roulement extérieur (20a) du côté extérieur dans les surfaces des chemins de roulement extérieurs à double rangée (20a) est réglée pour se situer dans un rapport Ho1/do compris entre 0,40 et 0,50 relativement au diamètre de billes (do) de la rangée de billes (14), et une hauteur d'épaulement (Hi1) de la surface du chemin de roulement extérieur (20a) du côté intérieur est réglée pour se situer dans un rapport Hi1/di compris entre 0,35 et 0,45 relativement au diamètre de billes (di) de la rangée de billes (14).

5. Dispositif de palier pour roue (3) selon la revendication 1, dans lequel un diamètre de cercle primitif (PCDo) de la rangée de billes du côté extérieur, dans la double rangée de billes (14), est réglé pour être supérieur à un diamètre de cercle primitif (PCDi) de la rangée de billes (14) du côté intérieur, et le nombre de billes de la rangée de billes (14) du côté extérieur est réglé pour être supérieur au nombre de billes du côté intérieur.

6. Dispositif de palier pour roue (3) selon la revendication 1, dans lequel l'angle incliné (θ) de la seconde surface en relief (24) est réglé pour être inférieur ou égal à 10° par rapport à la première surface en relief (19a).

7. Dispositif de palier pour roue (3) selon la revendication 1, dans lequel une rugosité de surface de la surface d'arc circulaire est limitée à une rugosité Ra inférieure ou égale à 3,2.

8. Dispositif de palier pour roue (3) selon l'une quelconque des revendications 1 à 7, dans lequel une rugosité de surface de la seconde surface en relief (24) est limitée à une rugosité Ra inférieure ou égale à 3,2.
